# EUROPEAN PATENT APPLICATION

(11) **EP 4 368 352 A1**
(43) Date of publication of application: **15.05.2024**
(21) Application number: 22207254.8
(22) Date of filing: 14.11.2022
(51) Int. Cl.: B25J 5/00, B25J 15/00, B25J 15/04, E21D 20/00

(54) **MOBILE CONSTRUCTION ROBOT**

(71) Applicant: Baubot GmbH, 1100 Wien (AT)
(72) Inventor: MIETH, Gabriel, Wien (AT); KESKIN, Saban, Wien (AT)
(74) Representative: SONN Patentanwälte GmbH & Co KG

(57) **Abstract**

Mobile construction robot (1) for mounting anchors (2) in drilling holes at a construction site, the mobile construction robot (1) comprising:
- a robot base having a top side (4A), a lower side (4B), a first lateral side (5A), a second lateral side (5B), a first end side (6A) and a second end side (6B);
- a propulsion system (7) arranged on the lower side (4B) of the robot base (3) for moving the mobile construction robot (1) on a surface of the construction site;
- a multi-axis robot-arm (9) with an end effector (11) arranged on the top side (4A) of the robot base (3), wherein the end effector (11) comprises a holder (12), in particular a chuck, for receiving an anchor mounting tool; and
- an anchor magazine (13) for storing anchors (2), wherein the anchor magazine (13) is arranged on the first lateral side (5A) or the second lateral side (5B) or the first end side (6A) or the second end side (6B) of the robot base (3).

## Description

The disclosure concerns a mobile construction robot for mounting anchors in drilling holes and/or for producing drilling holes at a construction site, comprising:
- a robot base having a top side, a lower side, a first lateral side, a second lateral side, a first end side and a second end side;
- a propulsion system arranged on the lower side of the robot base for moving the mobile construction robot on a surface of the construction site;
- a multi-axis robot-arm with an end effector arranged on the top side, wherein the end effector comprises a holder, in particular a chuck, for receiving an anchor mounting tool and/or a drill bit.

A mobile construction robot of this type may be used for drilling holes at predefined positions and/or for mounting anchors in previously produced drilling holes at a construction site. By automating the physically demanding and cumbersome tasks with the mobile construction robot, the construction can be sped up.

In order to avoid having the robot return to a home base or a central storage location after mounting each anchor, such robot may have an integrated anchor magazine from which an anchor can be picked-up for subsequent mounting in the drilling hole. In a similar fashion, in order to avoid having to manually exchange a drill bit for drilling holes of different diameters, such robot may have an integrated tool changer for storing drill bits.

An automatic locating, drilling and screw mounting machine is, for example, known from CN 110 587 632 A. The machine comprises a lifting table, a supporting frame and a caterpillar band-type movable chassis. A six-axis robot and a material box for storing pull-out screws are arranged on the center of the lifting table.

A method and an arrangement for mounting bolts in a tunnel wall is shown in WO 2016 001 315 A1. The arrangement has a bolt supply, in particular a plurality of boxes for bolts of different sizes. The bolt supply is arranged on top of a frame that is mounted on a trailer.

An autonomous roof bolter is shown in WO 2019 046 253 A1. The bolter comprises a drill mast for installing roof bolts in a mine passage and a material handling system with a storage pod for roof bolts. The storage pod is arranged on top of the bolter in between a robotic arm and a bolting module. The robotic arm can be used to retrieve bolts and deliver the bolts to the bolting module.

EP 3 848 166 A1 shows a construction robot for a ceiling. The robot includes a robotic arm with a drill, a second robotic arm which can manipulate anchor bolts and a third robotic arm where an impact wrench is mounted. Additionally, the robot has a loading unit for providing anchor bolt assemblies.

However, state-of-the-art mobile construction robots have the disadvantage that the travel time of the robot arm picking up an anchor from an anchor storage or a tool from the tool storage may be significant thereby increasing the time needed for completing the task. This problem may be particularly pressing when holes are to be drilled in the ground and/or on locations on walls below the storage of the anchors thus prolonging the travel time of the robot arm. Additionally, anchors, tools and their respective storage units are heavy objects, so that their arrangement on elevated positions on the robot may result in an unstable behavior of the robot especially while moving.

It is therefore an object of the invention to alleviate or eliminate at least some of the disadvantages of the prior art. In particular, it is an object of the invention to increase the efficiency of a mobile construction robot.

In an aspect of the invention, this object is solved by a mobile construction robot having an anchor magazine for storing anchors for connection to the anchor mounting tool, wherein the anchor magazine is arranged on the first lateral side or the second lateral side or the first end side or the second end side of the robot base.

In operation, the anchor mounting tool is received in the holder of the end effector. In this configuration, the robot arm may be moved to pick up one of the anchors from the anchor magazine with the anchor mounting tool. Then, the robot may be operated to mount the anchor in the drilling hole.

The mobile construction robot can be used for mounting anchors in drilling holes at a construction site for a building structure, which, for example, may be a building, a tunnel, a road, a bridge, a car park, a hospital, or any other infrastructure project where many, for example more than 1000, fixing points with anchors are required. The mobile construction robot has a robot base, which may have a chassis for the propulsion system and a robot base body on top of the chassis. The robot base may be generally box-shaped. The robot base may, for example, house electronics, control equipment, pneumatic and/or hydraulic compressors. The robot base has a top side, a lower side, a first lateral side, a second lateral side, a first end side and a second end side. A propulsion system is arranged on the lower side of the robot base, such that at least a part of the propulsion system is in contact with a surface, such as a ground, of the construction site in order to move the mobile construction robot. The propulsion system may for example comprise a motor, wheels and/or a continuous track. The top side of the robot base is opposite of the lower side of the robot base. The propulsion system may have a main axis of propulsion. The first lateral side and the second lateral side may extend essentially upwards and parallel to the main axis of propulsion, whereas the first end side and the second end side may be essentially orthogonal to the main axis of propulsion (i.e. the direction of movement going straight forward or backward). The mobile construction robot further comprises a multi-axis robot-arm arranged on the top side of the robot base. The robot-arm may for example comprise six axes, in order to provide sufficient degrees of freedom for the robot-arm to be able to reach various positions. An attachment end of the robot arm opposite to the end effector may be arranged closer to the first end side than to the second end side of the robot base, preferably adjacent to an end region that is formed between the first end side and the top side. The end effector comprises a holder for releasably mounting an anchor mounting tool and/or a drill bit for producing drilling holes at the construction site. Preferably, different anchor mounting tools and/or drill bits may be exchangeably connected to the holder. The holder may comprise a chuck for a drilling bit and/or an anchor mounting tool for picking up and mounting anchors. Preferably, the chuck can be used both for receiving drill bits for producing drilling holes and for receiving anchor mounting tools for mounting anchors. In case a drill bit is mounted on the chuck, the robot can drill holes. In case an anchor mounting device is mounted on the chuck, the robot can pick-up anchors and mount anchors in previously drilled holes.

For the purpose of this disclosure, all directions and positions, such as "vertical", "horizontal", "upper and lower region" are given with respect to the intended use of the mobile construction robot on a horizontal underground. Of course, the mobile construction robot may drive on an inclined surface. In this case, the directions and positions must be transferred accordingly.

Furthermore, the mobile construction robot comprises an anchor magazine and a plurality of anchors stored in the anchor magazine, which anchors can be picked-up by operating the robot arm with the anchor mounting tool attached to the holder. In the invention, the anchor magazine is arranged on one of the first lateral side, second lateral side, first end side or second end side of the robot base, preferably in its entirety below the top side. Thus, the distance between the anchor magazine and the drilling hole is short and consequently also the travel time of the robot arm is reduced. Especially when holes are to be drilled in the floor or anywhere below the top side of the robot base, the travel time is significantly reduced. This advantage also applies to an embodiment with the tool changer.

The anchor magazine is preferably attached to the chassis. Preferably, the anchor magazine is arranged vertically overlapping with the propulsion system. It is beneficial for the stability of the mobile construction robot to mount the anchor magazine in a lower region of the mobile construction robot to lower the center of gravity of the mobile construction robot and thus increase the stability of the mobile construction robot. This is particularly advantageous if, as may be the case, the surface of the construction site has inclined sections or obstacles the mobile construction robot must get over. Hence, the stability of the mobile construction robot is crucial.

In addition, the anchor magazine and stored anchors in the anchor magazine may be heavy and, for example, may weigh up to 50 kg, depending on the quantity and the type of anchors that are stored. It is therefore beneficial to arrange the anchor magazine in a lower region of the mobile construction robot to simplify the refilling of the anchor magazine with anchors or the exchange of an empty anchor magazine with a fully loaded anchor magazine. By arranging the anchor magazine in a lower region of the mobile construction robot, neither anchors nor an anchor magazine has to be lifted to an elevated position, e.g. on the top of the mobile construction robot.

Optionally, the anchor magazine has mounts, in particular mounting slots, configured to store anchors in lying (i.e. flat) positions, preferably in horizontal positions. A lying position is a position in which the main axis of an anchor is at an angle of greater than 45°, in particular greater than 60°, to the vertical axis. The vertical axis is substantially perpendicular to the main extension plane of the lower side of the robot base. The mounts can for example be slots which can receive a first end of an anchor. Alternatively, mounts can be pins, preferably configured to engage with a first end of an anchor. Preferably, the anchors are stored horizontally, such that the main axis of each anchor is essentially perpendicular to the vertical axis. The lying position of the anchors is beneficial for reducing the travel time of the robot arm compared to an upright or vertical position of the anchors. Anchors positioned upright typically are picked-up from above, whereas lying anchors can be picked-up with the robot arm from a lateral side, thus reducing the travel time of the robot-arm.

The anchor magazine can store one type of anchors or, alternatively, different types of anchors. The mobile construction robot can discriminate various types of anchors either by having an information on the type of anchor stored in each mount. Or, alternatively, the mobile construction robot may comprise a camera to enable computer vision to discriminate various types of anchors. Alternatively, the stored anchors may be equipped with an RFID chip, a magnetic code and/or a QR code storing information on the type of the anchor. The mobile construction robot may comprise means to read out this information.

In order to mount anchors of different types, the holder on the end effector may be equipped with an anchor mounting tool suitable for the respective type of anchor. A picked-up anchor can by mounted by a rotational movement, e.g. by screwing in the anchor, and/or by a hammering or pounding motion of the holder. The anchor remains in the drilling hole at the construction site.

The anchor magazine may have an anchor plate for the mounts, the anchor plate preferably being arranged in an upright state, preferably in a vertical state. The anchor plate can for example be a metal plate comprising the mounts for supporting stored anchors. The upright state is such that the main extension plane of the anchor plate is at an angle of lower than or equal to 45° to the vertical axis. Preferably, the main extension plane of the anchor plate is parallel to the vertical axis such that the anchor plate is in an upright state. The anchor plate can increase the stability of the mounts and the anchor magazine. The upright state of the anchor plate is beneficial for storing the anchors in a lying position.

Preferably, each mount is configured for receiving a first end of an anchor and for storing one anchor, such that the end effector of the robot arm can engage with the second end of the stored anchor. If, for example, the mounts are slots, each slot can receive the first end of an anchor. The slots can for example have a receiving opening, which can form fit the first end of the anchor. The first end of the anchor can be the end of the anchor which is to be inserted into a drilled hole. The second end of the anchor can be received by the holder. The end effector of the robot arm can pick-up an anchor by engaging with the second end of an anchor stored in the anchor magazine. The second end of the anchor may, for example, protrude from a drilling hole in a mounted state of the anchor. The holder of the end effector may comprise a chuck, wherein an anchor mounting tool may be connected to the chuck. The anchor mounting tool may be configured to engage with the second end of the anchor.

Optionally, the center of gravity of the anchor magazine lies within a symmetry plane, in particular a longitudinal symmetry plane, of the robot base. The robot base may have a longitudinal and a transverse symmetry plane, which are perpendicular to each other and both are parallel to the vertical axis. The longitudinal symmetry plane intersects the first end side and the second end side of the robot base. The transverse symmetry plane intersects the first lateral side and the second lateral side. By arranging the center of gravity of the anchor magazine to lie in the longitudinal symmetry plane, a lateral imbalance of the robot base can be avoided and the stability of the mobile construction robot can be increased.

The anchor magazine preferably is releasably connected to the robot base. Preferably, the anchor magazine can be releasably connected to the robot base or disconnected from the robot base without a tool, for example by attaching it to a support provided on the robot base. In particular, several supports may be provided on the robot base to which the magazine or several magazines can be connected. Preferably at least two supports may be provided, each at one of the first lateral side or the second lateral side or the first end side or the second end side of the robot base. The supports may be on the same side, but preferably they are on different sides. In particular there may be one support on each one of the first lateral side, the second lateral side, the first end side, and the second end side of the robot base. By providing multiple supports at different positions, an anchor magazine can be connected to a support at a particularly favorable position for a specific job, e.g., on the first lateral side or the second lateral side of the robot base for mounting anchors in a wall, wherein the robot may move along the wall. The anchor magazine can for example be stocked with anchors while it is connected to the robot base. Alternatively, the anchor magazine can be stocked with anchors while being released from the robot base. Once the anchor magazine connected to the robot base is empty, the anchor magazine can be detached from the robot base and can be replaced with another anchor magazine, which is fully equipped with anchors. Thereby, the stand-by time of the mobile construction robot can be minimized.

The mounts preferably are arranged in a grid, in particular a regular grid. Preferably, the anchor magazine comprises at least two rows spaced from one another in vertical direction, forming a grid in two dimensions. The grid may be arranged such that the rows extend horizontally and columns extend vertically. Alternatively, the grid can be tilted, such that the rows have an angle with respect to a horizontal plane. Alternatively, the anchor magazine can comprise a single row of mounts for storing anchors forming a grid in one dimension.

The mobile construction robot preferably comprises a tool changer for storing at least one anchor mounting tool, in particular a plurality of anchor mounting tools, and/or at least one drill bit for producing drilling holes at the construction site, in particular a plurality of drill bits, for connection to the holder.

The holder on the end effector may comprise a chuck for receiving and holding a drill bit for drilling holes or an anchor mounting tool for mounting anchors in drilling holes. The chuck and the drill bits and/or the chuck and the anchor mounting tools can for example engage with one another based on the common SDS system ("Special Direct System"). For producing drilling holes of different sizes, different drill bits can be used. These drill bits can be stored in the tool changer. Also anchor mounting tools for mounting different types of anchors can be stored in the tool changer. The chuck may also be configured for receiving and holding an anchor mounting tool. By storing drill bits and/or anchor mounting tools in the tool changer, the mobile construction robot does not need to return to a central storage location for changing a drill bit or for changing an anchor mounting tool. Also, the tool changer can be configured to change a drill bit or an anchor mounting tool mounted on the holder automatically, such that no human interaction is necessary. In this way, the idle time of the mobile construction robot can be low.

The tool changer preferably is arranged on the first lateral side or the second lateral side or the first end side or the second end side of the robot base, i.e. below the top side of the robot base. In this way, the distance from the drilling hole to the tool changer is short and consequently also the travel time of the robot arm is reduced. Especially when holes are drilled in the floor or anywhere below the top side of the robot base, the travel time is significantly reduced.

Preferably, the tool changer has mounts configured to store the drill bits and/or anchor mounting tools, in particular in upright positions, preferably in vertical positions. The tool changer can store various types of tools, such as drill bits and/or anchor mounting tools. The mobile construction robot may be able to discriminate between various types of tools either by having an information on the type of tool stored in each mount or, alternatively, by equipping the mobile construction robot with a camera to enable computer vision to discriminate between various types of tools. Alternatively, the stored tools may be equipped with an RFID chip, a magnetic code and/or a QR code storing information on the type of the tool. The mobile construction robot may comprise means to read out this information. In addition, the tool changer may comprise means to automatically present a requested tool to the holder and may be configured to automatically exchange the tool.

Optionally, the center of gravity of the tool changer lies within the symmetry plane, in particular the longitudinal symmetry plane, of the robot base. Thus, a lateral imbalance of the robot base can be avoided and the stability of the mobile construction robot can be increased.

Preferably, the tool changer is releasably connected to the robot base. The tool changer preferably can be releasably connected to the robot base or disconnected from the robot base without a tool, for example by attaching it to a tool changer holder provided on the robot base.

In particular, several tool changer holders may be provided on the robot base to which the tool changer or several tool changers can be connected. Preferably at least two tool changer holders are provided, each at one of the first lateral side or the second lateral side or the first end side or the second end side of the robot base. The tool changer holders may be on the same side, but preferably they are on different sides. In particular there may be one tool changer holder on each one of the first lateral side, the second lateral side, the first end side, and the second end side of the robot base. By providing multiple tool changer holders at different positions, a tool changer can be connected to a tool changer holder at a particularly favorable position for a specific job, e.g., on the first lateral side or the second lateral side of the robot base for producing drilling holes in a wall, wherein the robot may move along the wall.

The tool changer may for example be stocked with drill bits and/or anchor mounting tools while it is connected to the robot base. Alternatively, the tool changer may be stocked with drill bits and/or anchor mounting tools when released from the robot base, while for example another tool changer is mounted on the mobile construction robot. Thereby, the stand-by time of the mobile construction robot can be minimized.

Preferably, the anchor magazine is attached to the tool changer, wherein the tool changer is mounted on the first lateral side or the second lateral side or the first end side or the second end side of the robot base. By mounting the anchor magazine on the tool changer, the distance between the anchor magazine and the tool changer is small. Hence, also the travel time of the robot arm is low, regardless if a drill bit or an anchor mounting tool needs to be changed, an anchor needs to be picked-up or both is necessary.

The anchor magazine can be releasably mounted on the tool changer preferably by means of at least one bayonet mount, in particular by means of at least two, for example by means of four bayonet mounts. By using bayonet mounts, the anchor magazine can be mounted on the tool changer in a particularly easy, reliable way without the necessity of using further tools.

However, other types of releasable connections, may be used, too.

In another aspect of the invention, a method for mounting an anchor in a drilling hole at a construction site with the mobile construction robot according to one of the embodiments described above comprises the steps of:
picking up an anchor from the anchor magazine with an anchor mounting tool connected to the holder; and
mounting the picked-up anchor in the drilling hole.

In a preferred embodiment, the method further comprises the step of:
blowing out the drilling hole with pressurized air by means of a blower of the end effector prior to mounting the anchor in the drilling hole.

Preferably, the method further comprises the step of:
drilling the drilling hole by means of a drill bit connected to the holder prior to mounting the anchor in the drilling hole.

In another aspect of the invention, a mobile construction robot for producing drilling holes at a construction site comprises a tool changer for storing at least one drill bit for connection to the holder, wherein the tool changer is arranged on the first lateral side or the second lateral side or the first end side or the second end side of the robot base.

Preferably, the tool changer is releasably connected to the robot base.

In another aspect of the invention, a method for producing drilling holes at a construction site with a mobile construction robot in any of the embodiments described above comprises the steps of:
- connecting a drill bit from the tool changer to the holder; and
- drilling at least one drilling hole by means of the drill bit.

By means of the propulsion system, for example by means of a motor and a continuous track system, the mobile construction robot may be moved next to a predefined position for an anchor. The mobile construction robot may comprise a tracking system in order to find and verify predefined positions of anchors and to be able to operate autonomously or automatically. The mobile construction robot may produce the drilling holes at the predefined positions. In order to produce a drilling hole, the end effector can pick-up a drill bit from the tool changer. Once a drill hole is drilled, or alternatively a number of holes are drilled, the drill bit may be exchanged for an anchor mounting tool by means of the tool changer. The end effector may then pick-up an anchor from the anchor magazine. The picked-up anchor is then mounted in the drilling hole by means of the anchor mounting tool, so that the anchor is mounted at the predefined position. Optionally, the end-effector of the robot arm may comprise a blower to blow out drilling holes in order to remove dirt from the hole. In general, there are two types of anchors, namely mechanical anchors and chemical anchors. Chemical anchors typically expand during or after mounting. Especially when chemical anchors are used, it is beneficial to blow out residuals such as dirt from drilled holes to enhance the grip or adhesion of the mounted anchor within the drilled hole. The mobile construction robot may be configured to drill drilling holes of different diameters and depths and to mount anchors of different types, such as mechanical anchors and chemical anchors, and anchors of various diameters, lengths and shapes.

In an embodiment, the mobile construction robot is only used to produce drilling holes, i.e., without mounting anchors. In this case, no anchor magazine is necessary. In case the holes are already drilled, the mobile construction robot can be used to mount anchors, i.e., without producing drilling holes. In general, the mobile construction robot can be used both for drilling holes and for mounting anchors.

By way of example, the disclosure is further explained with respect to some selected embodiments shown in the drawings for purposes of illustration. However, these embodiments shall not be considered limiting for the disclosure.
Fig. 1 shows a mobile construction robot with a robot arm, an anchor magazine and a tool changer.
Fig. 2 shows detail A of Fig. 1.
Fig. 3 shows detail B of Fig. 1.
Fig. 4 shows the mobile construction robot of Fig. 1 in the process of picking-up an anchor from the anchor magazine.
Fig. 5 shows a detail of Fig. 4.
Fig. 6 shows the mobile construction robot of Fig. 4 in a side view.
Fig. 7 shows a detail of Fig. 6.

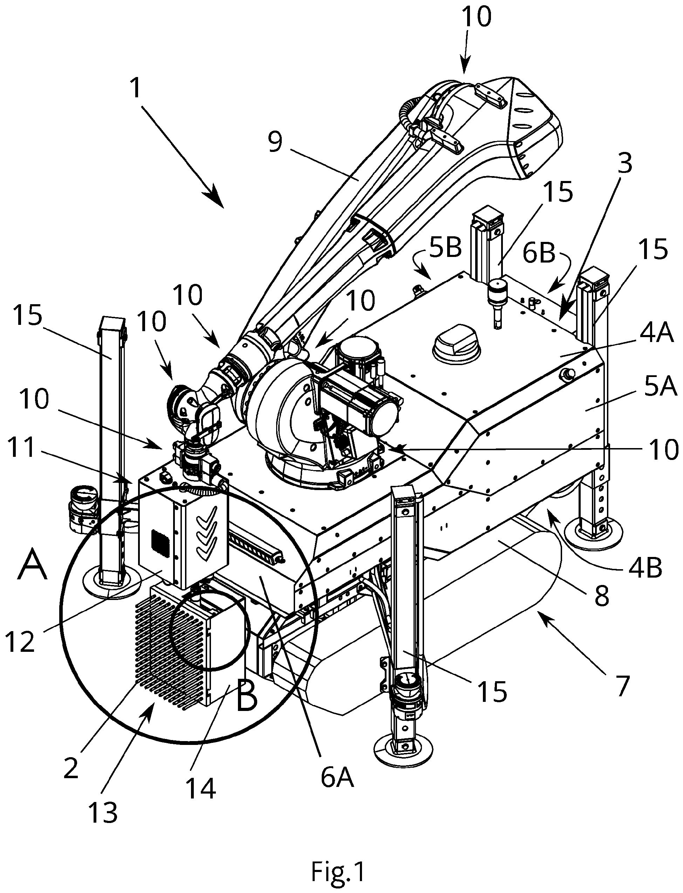

Fig. 1 shows a mobile construction robot 1 for drilling holes and mounting anchors 2 in the drilling holes on a construction site. The mobile construction robot 1 comprises a robot base 3 with a top side 4A, a lower side 4B opposite of the top side 4A, a first lateral side 5A and a second lateral side 5B, a first end side 6A, here the front end, and a second end side 6B, here the rear end. On the lower side of the robot base 3 a propulsion system 7 is arranged for moving the mobile construction robot 1 on a surface of the construction site. In the shown example, the propulsion system 7 includes two continuous tracks 8. However, the propulsion system 7 may alternatively comprise wheels (not shown). A multi-axis robot-arm 9 is arranged on the top side 4A of the robot base 3. The multi-axis robot arm 9 comprises a total of six axes 10. The multi-axis robot-arm 9 further comprises an end effector 11 with a holder 12 which may be a chuck. The holder device 12 can hold a drill bit for drilling holes at the construction site and for mounting anchors 2 in the drilled holes. The mobile construction robot 1 further comprises an anchor magazine 13 for storing anchors 2. The anchor magazine 13 is arranged adjacent to the first end side 6A of the robot base 3 entirely below the top side 4A of the robot base 3. In the shown example, the multi-axis robot-arm 9 is mounted closer to the first end side 6A than to the second end side 6B of the robot base 3, such that it is close to the anchor magazine 13. The end effector is configured for picking up anchors 2 from the anchor magazine 13 and for mounting the anchors 2 in the drilled holes.

The center of gravity of the anchor magazine 12 lies within a longitudinal symmetry plane of the robot base 3. The symmetry plane is parallel to the main axis of propulsion. In other words, the anchor magazine 12 is arranged centrally between the continuous tracks 8 at the first end side. This arrangement increases the stability of the mobile construction robot 1, as the weight of the anchor magazine 13 and the stored anchors 2 is distributed evenly between the two continuous tracks 8. The anchor magazine 13 is vertically overlapping with at a part of the propulsion system 7, such that the center of gravity of the anchor magazine 13 is arranged low on the mobile construction robot 1. This further increases the stability of the mobile construction robot 1.

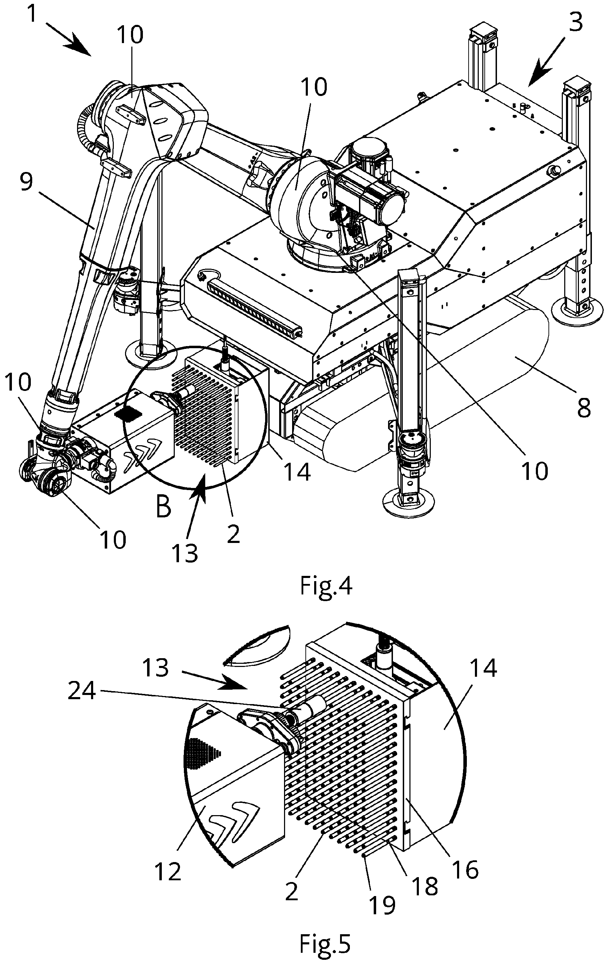

The mobile construction robot 1 further comprises a tool changer 14 on the first end side 6A of the robot base 3 entirely below the top side 4A. The tool changer 14 is used for storing drill bits (not shown) and anchor mounting tools 24 (see fig. 5) for connection to the holder 12. The holder 12 is configured for picking up drill bits from the tool changer 14 and for drilling holes with a picked-up drill bit at a predefined position at the construction site. The tool changer 14 can accommodate drill bits of various sizes to enable the drilling of holes with different sizes. The tool changer 14 can also store various anchor mounting tools 24 for mounting different types of anchors 2. The holder 12 is also configured for picking up an anchor mounting tool 24 from the tool changer 14. The exchange of a drill bit or an anchor mounting device 24 mounted on holder 12 can be done automatically, i.e. without manual intervention. The tool changer 14 is mounted on the first end side 6A of the robot base 3. The center of gravity of the tool changer 14 lies within the longitudinal symmetry plane of the robot base 3, such that the center of gravity of the tool changer 14 is arranged at a lower region of the mobile construction robot 1. This further increases the stability of the mobile construction robot 1. The tool changer 14 is also vertically overlapping with the propulsion system 7, here with the tracks 8.

The anchor magazine 13 is releasably connected to the tool changer 14, such that the anchor magazine 13 is arranged adjacent to the first end side 6A of the robot base 3.

The mobile construction robot 1 is equipped with four automatically extendable supports 15, which can be used to stabilize the mobile construction robot 1 during drilling and mounting anchors 2.

In order to drill holes and mount anchors 2 at a construction site with the mobile construction robot 1, the mobile construction robot 1 approaches a predefined position at which an anchor 2 shall be placed. The multi-axis robot arm 9 moves the end effector 11 accordingly. The mobile construction robot 1 may be equipped with a tracking system such as GPS or a triangulation-based tracking system in order to locate and verify the predefined position. The mobile construction robot 1 may comprise a controller for controlling the mobile construction robot 1 and a memory for storing the predefined locations. Alternatively or additionally, the mobile construction robot 1 may have a connection, preferably a Bluetooth connection, to an external controller or a connection to the internet for remote control. Once the mobile construction robot 1 arrives next to a predefined location for placing an anchor 2, the mobile construction robot 1 drills a hole at the predefined position by means of a drill bit (not shown) picked-up from the tool changer 14 by the end effector 11. By means of the six axes 10, the end-effector 11 can be positioned in an exact and consistent manner. The end effector 11 may comprise a blower (not shown) for blowing out drilled holes with pressurized air in order to remove residuals such as dirt and to enhance the grip of an anchor 2 in a drilled hole. Then, the holder 12 is equipped with an anchor mounting tool 24 so that an anchor 2 may be picked up from the anchor magazine 13. Finally, the picked-up anchor 2 is mounted in the previously drilled hole. Once the anchor 2 is mounted at the predefined position, the mobile construction robot 1 may be moved to the next position to repeat the procedure. Preferably, the mobile construction robot 1 is positioned such that the robot arm 9 can move the end effector 11 to a number of predefined positions of anchors 2 without moving the mobile construction robot 1. In that case, the mobile construction robot 1 can start by drilling a hole at each predefined position that can be reached and then, after the holes have been drilled, mount anchors 2 in all these holes. It is beneficial for the overall process of drilling and mounting anchors to have as little tool changes as possible while not having to move the mobile construction robot 1.

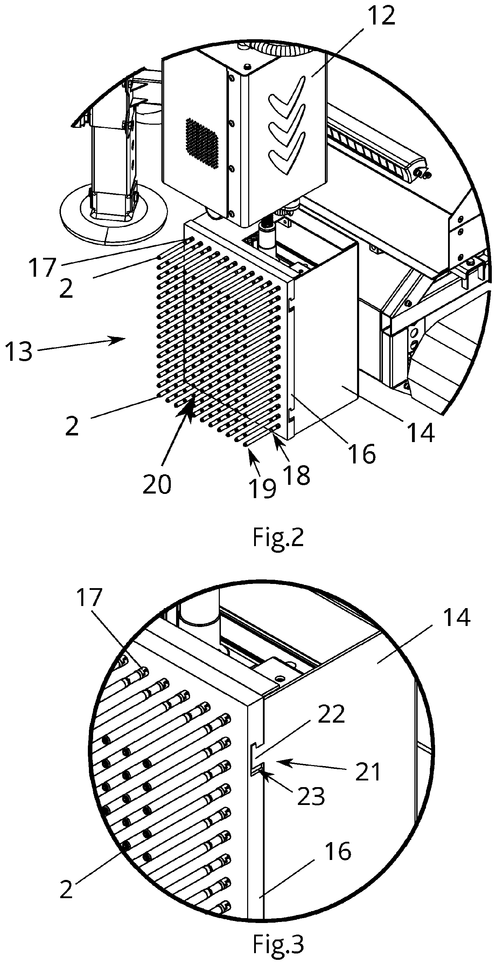

Fig. 2 shows a detailed view indicated by "A" in fig. 1 of the anchor magazine 13. The anchor magazine 13 comprises an anchor plate 16, which is mounted on the tool changer 14 in a vertical state. The anchor magazine 13 has mounts 17 arranged on the anchor plate 16, in this example the mounts 17 are mounting slots. The mounting slots are configured for receiving a first end 18 of an anchor 2 and for storing one anchor 2. The holder 12 can engage with a second end 19 of a stored anchor 2 by means of an anchor mounting tool 24 (see fig. 5). The mounts 17 are configured to store anchors 2 in lying positions, in this example in horizontal positions. The main axis of the stored anchors 2 is in this example substantially parallel to the main axis of the propulsion system 7. The anchor magazine 13 has 165 mounts 17 in a regular grid 20 for receiving and storing 165 anchors 2. The regular grid 20 comprises fifteen horizontally arranged columns and eleven vertically arranged rows.

Fig. 3 shows a detailed view indicated by "B" in fig. 1 of a part of the anchor magazine. The anchor magazine 13 is releasably mounted on the tool changer 14 e.g. by means of four bayonet mounts 21, one of which is shown in detail in fig. 3. The bayonet mount 21 may have a protrusion 22 on the tool changer 14 and a bayonet-slot 23 on the anchor plate 16, which are configured to engage and interlock with one another. In order to detach the anchor magazine 13 from the tool changer 14, the anchor plate 16 can be lifted vertically against gravity to disengage the protrusion 22 from the bayonet-slot 23. The anchor magazine 13 can be stocked with anchors 2 while it is mounted on the tool changer 14 or, alternatively, the anchor magazine 13 can be stocked with anchors 2 while being released. Once the anchor magazine 13 connected to the tool changer 14 is empty, the anchor magazine 13 can be detached and can be replaced with another anchor magazine 13, which is fully equipped with anchors 2.

Fig. 4 shows the mobile construction robot 1 of fig. 1 with an anchor mounting tool 24 mounted on holder 12. The mobile construction robot is shown in the process of picking-up an anchor 2 from the anchor magazine 13. The axes 10 of the robot arm 9 are rotated such that the main axis of the anchor mounting tool 24 coincides with a main axis of an anchor 2 that is to be picked up from the anchor magazine 13.

Fig. 5 shows a detailed view indicated by "C" in fig. 4. The anchor mounting tool 24 can engage with the second end 19 of the anchor 2 in order to pick-up the anchor 2. The holder 12 is configured to rotate the anchor 2 around its main axis in order to screw the anchor 2 into the hole. Additionally, or alternatively, a hammering or pounding motion can be conducted by the holder 12 in order to mount an anchor 2.

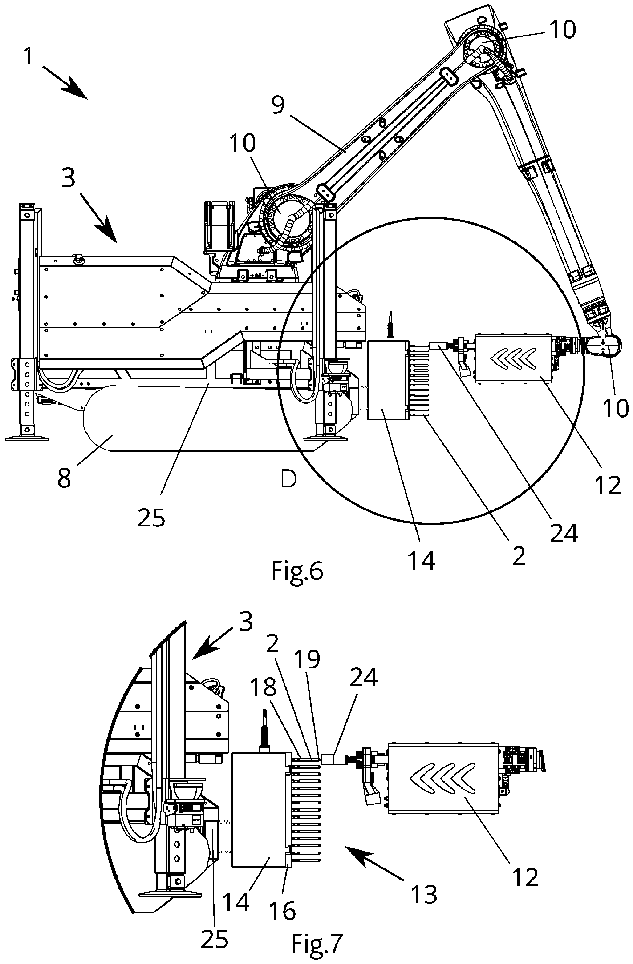

Fig. 6 shows the mobile construction robot of fig. 4 in a side view. The main axis of the anchor mounting tool 24 coincides with the main axis of an anchor 2 that is to be picked up from the anchor magazine 13. The robot base 3 comprises a chassis 25, at which the tool changer 14 is mounted.

Fig. 7 shows a detailed view indicated by "D" in fig. 6. In order to pick-up the anchor 2, the holder 12 is moved towards the anchor 2 by the robot arm 9.

## Claims

1. Mobile construction robot (1) for mounting anchors (2) in drilling holes at a construction site, the mobile construction robot (1) comprising:
- a robot base having a top side (4A), a lower side (4B), a first lateral side (5A), a second lateral side (5B), a first end side (6A) and a second end side (6B);
- a propulsion system (7) arranged on the lower side (4B) of the robot base (3) for moving the mobile construction robot (1) on a surface of the construction site;
- a multi-axis robot-arm (9) with an end effector (11) arranged on the top side (4A) of the robot base (3), wherein the end effector (11) comprises a holder (12), in particular a chuck, for receiving an anchor mounting tool; and
- an anchor magazine (13) for storing anchors (2) for connection to the anchor mounting tool,
**characterized in that**
the anchor magazine (13) is arranged on the first lateral side (5A) or the second lateral side (5B) or the first end side (6A) or the second end side (6B) of the robot base (3).

2. Mobile construction robot (1) according to claim 1, **characterized in that** the anchor magazine (13) has mounts (17), in particular mounting slots, configured to store anchors (2) in lying positions, preferably in horizontal positions.

3. Mobile construction robot (1) according to claim 1 or 2, **characterized in that** the anchor magazine (13) has an anchor plate (16) for the mounts (17), the anchor plate (16) being arranged in an upright state, preferably in a vertical state.

4. Mobile construction robot (1) according to claim 2 or 3, **characterized in that** each mount (17) is configured for receiving a first end (18) of an anchor (2) and for storing one anchor (2), such that the anchor mounting device (12) can engage with the second end (19) of the stored anchor (2).

5. Mobile construction robot (1) according to any one of the previous claims, **characterized in that** the center of gravity of the anchor magazine (13) lies within a symmetry plane of the robot base (3).

6. Mobile construction robot (1) according to any one of the previous claims, **characterized in that** the anchor magazine (13) is releasably connected to the robot base (3).

7. Mobile construction robot (1) according to any one of the previous claims, **characterized in that** the mounts are arranged in a grid, in particular a regular grid (20).

8. Mobile construction robot (1) according to any one of the previous claims, **characterized by**
a tool changer (14) for storing at least one anchor mounting tool, in particular a plurality of anchor mounting tools, and/or at least one drill bit for producing drilling holes at the construction site, in particular a plurality of drill bits, for connection with the holder (12).

9. Mobile construction robot (1) according to claim 8, **characterized in that** the anchor magazine (13) is attached to the tool changer (14).

10. Mobile construction robot (1) according to claim 9, **characterized in that** the anchor magazine (13) is releasably attached to the tool changer (14), preferably by means of at least one bayonet mount (21), in particular by means of at least two, for example by means of four, bayonet mounts (21).

11. Method for mounting an anchor in a drilling hole at a construction site with the mobile construction robot (1) according to any one of the previous claims, comprising the steps of:
- picking up an anchor (2) from the anchor magazine (13) with an anchor mounting tool connected to the holder (12); and
- mounting the picked-up anchor (2) in the drilling hole.

12. The method of claim 11, **characterized by**:
drilling the drilling hole by means of a drill bit connected to the holder (12) prior to mounting the anchor (2) in the drilling hole.

13. Mobile construction robot (1) for producing drilling holes at a construction site, the mobile construction robot (1) comprising:
- a robot base having a top side (4A), a lower side (4B), a first lateral side (5A), a second lateral side (5B), a first end side (6A) and a second end side (6B);
- a propulsion system (7) arranged on the lower side (4B) of the robot base (3) for moving the mobile construction robot (1) on a surface of the construction site;
- a multi-axis robot-arm (9) with an end effector (11) arranged on the top side (4A) of the robot base (3), wherein the end effector (11) comprises a holder (12) for a drill bit for drilling holes at the construction site; and
- a tool changer (14) for storing at least one drill bit for connection to the holder (12),
**characterized in that**
the tool changer (14) is arranged on the first lateral side (5A) or the second lateral side (5B) or the first end side (6A) or the second end side (6B) of the robot base (3).

14. Mobile construction robot (1) according to claim 13, **characterized in that** the tool changer (14) is releasably connected to the robot base (3).

15. Method for producing drilling holes at a construction site with a mobile construction robot (1) of claim 14, comprising the steps of:
- connecting a drill bit from the tool changer (14) to the holder (12); and
- drilling at least one drilling hole by means of the drill bit.
